# EUROPÄISCHE PATENTSCHRIFT

(11) **EP 0 904 328 B1**
(45) Veröffentlichungstag und Bekanntmachung des Hinweises auf die Patenterteilung: **31.07.2002**
(21) Anmeldenummer: 97924974.5
(22) Anmeldetag: 22.05.1997
(51) Int. Cl.: C09J 4/04, C09J 11/08

(54) **CYANACRYLAT-KLEBSTOFF**
CYANACRYLATE ADHESIVE
ADHESIF DU TYPE CYANOACRYLATE

(30) Priorität: 31.05.1996 DE 19621850
(43) Veröffentlichungstag der Anmeldung: 31.03.1999
(73) Patentinhaber: Henkel Kommanditgesellschaft auf Aktien, 40589 Düsseldorf-Holthausen (DE)
(72) Erfinder: KLAUCK, Wolfgang, D-40670 Meerbusch (DE); Klein, Johann, D-40593 Düsseldorf (DE); DUHM, Lydia, D-40593 Düsseldorf (DE)
(86) Internationale Anmeldenummer: EP9702625
(87) Internationale Veröffentlichungsnummer: WO9746630

(56) Entgegenhaltungen:
- DE-A- 3 400 577
- DE-A- 4 317 886
- STN International, File CAPLUS, CAPLUS accession no. 1978:444700, Korshak, V. V. et al: "Cyakrin SO-4adhesive"; & Otkrytiya, Izobret., Prom. Obraztsy, Tovarnye Znaki 1978, 55(19), 5-6

## Beschreibung

Die Erfindung betrifft einen Cyanacrylat-Klebstoff mit einem Ester als Weichmacher.

Cyanacrylat-Klebstoffe mit einem Ester als Weichmacher sind bekannt. So wird in der DE 34 00 577 gelehrt, neben 4 bis 30 Gew.-% eines Copolymeren aus Vinylchlorid und Vinylacetat noch bis zu 25 Gew.-% eines Weichmachers zuzusetzen. Dieser Weichmacher ist ein Ester aus einer aromatischen Mono- oder Dicarbonsaure und einer Mono- bzw. Polyhydroxy-Verbindung. Angeblich wird durch die Zugabe dieses aromatischen Weichmachers die Härtungsgeschwindigkeit des Klebstoffes nicht wesentlich beeinträchtigt und auch die Qualität der Bindung bei der Aushärtung nicht wesentlich verschlechtert. Beim Nacharbeiten dieser Versuche wurde jedoch festgestellt, daß die Härtungsgeschwindigkeit deutlich herabgesetzt wurde. So wird die Abbindegeschwindigkeit von Cyanacrylsäureethylester z. B. an EPDM durch einen 30 %igen Zusatz von Butylbenzylphthalat von 5 sec auf 35 sec verlangsamt.

Auch in der DE 43 17 886 wird gelehrt, dem Cyanacrylat-Klebstoff zur Verminderung der Haftung auf der Haut folgende Ester zuzusetzen:
1. Aliphatische Carbonsäureester mit einer aliphatischen Gruppe, in der 6 oder mehr Kohlenstoffatome direkt miteinander verbunden sind.
2. Aliphatische Carbonsäureester mit mindestens 2 aliphatischen Gruppen, in denen 4 oder mehr Kohlenstoffatome direkt miteinander verbunden sind.
3. Carbonsäureester einer carbocyclischen Verbindung, die in einem Carbonsäurerest oder einem Alkoholrest eine aliphatische Gruppe aufweist, in der 5 oder mehr Kohlenstoffatome direkt miteinander verbunden sind. Außerdem enthalten die Cyanacrylat-Klebstoffe noch Polymerisationsbeschleuniger.

In der SU 607 573 wird eine Klebstoff-Zusammensetzung auf der Basis von Cyanacrylaten und Glycerintriacetat beschrieben. Die Katalysatoren zur Herstellung von Glycerintriacetat werden nicht genannt. Die Zusammensetzung muß im Kühlschrank bei Temperaturen nicht über 5 °C aufbewahrt werden.

Die erfindungsgemäße Aufgabe besteht darin, die Nachteile der bekannten Cyanacrylat-Klebstoffe mit Weichmachern zu vermeiden, insbesondere einen Cyanacrylat-Klebstoff mit guter Lagerstabilität, brauchbaren Festigkeiten und praktisch unveränderter Abbindegeschwindigkeit bereitzustellen.

Die erfindungsgemäße Lösung ist den Patentansprüchen zu entnehmen. Sie besteht im wesentlichen darin, mindestens einen Teil- und/oder Voll-Ester aus einer ein- oder mehrwertigen aliphatischen Carbonsäure mit 1 bis 5 direkt miteinander verbundenen C-Atomen und 1- bis 5wertigen aliphatischen Alkoholen mit 1 bis 5 direkt miteinander verbundenen C-Atomen als Weichmacher einzusetzen, wobei die Anzahl der direkt miteinander verbundenen C-Atome in den weiteren aliphatischen Gruppen maximal 3 beträgt, wenn eine aliphatische Gruppe 4 oder 5 direkt miteinander verbundene C-Atome enthält. Kennzeichnend ist ferner, daß der Ester-Zusatz frei von Alkali-Metallen und Aminen ist.

Bei der Alkoholkomponente des Esters handelt es sich vorzugsweise um Alkohole mit 1 bis 5, insbesondere mit 2 bis 4 OH-Gruppen und mit bis 2 bis 5, insbesondere 3 oder 4 direkt miteinander verbundenen C-Atomen. Die Anzahl der nicht direkt miteinander verbundenen C-Atome kann bis zu 110, insbesondere bis zu 18 C-Atomen betragen.

Als Beispiele für **einwertige Alkohole** seien genannt Methanol, Ethanol, 1-Propanol, 2-Propanol, 1-Butanol, 2-Butanol, 2,2-Dimethyl-1-propanol, 2-Methyl-1-propanol, 2,2-Dimethyl-1-propanol, 2-Methyl-2-propanol, 2-Methyl-1-butanol, 3-Methyl-1-butanol, 2-Methyl-2-butanol, 3-Methyl-2-butanol, 1-Pentanol, 2-Pentanol, 3-Pentanol, Cyclopentanol, Cyclopentenol, Glycidol, Tetrahydrofurfurylalkohol, Tetrahydro-2H-pyran-4-ol, 2-Methyl-3-buten-2-ol, 3-Methyl-2-buten-2-ol, 3-Methyl-3-buten-2-ol, 1-Cyclopropyl-ethanol, 1-Penten-3-ol, 3-Penten-2-ol, 4-Penten-1-ol, 4-Penten-2-ol, 3-Pentin-1-ol, 4-Pentin-1-ol, Propargylalkohol, Allylalkohol, Hydroxy-aceton, 2-Methyl-3-butin-2-ol.

Als Beispiele für **zweiwertige Alkohole** seien genannt: 1,2-Ethandiol, 1,2-Propandiol, 1,3-Propandiol, Dihydroxyaceton, Thioglycerin, 2-Methyl-1,3-propandiol, 2-Butin-1,4-diol, 3-Buten-1,2-diol, 2,3-Butandiol, 1,4-Butandiol, 1,3-Butandiol, 1,2-Butandiol, 2-Buten-1,4-diol, 1,2-Cyclopentandiol, 3-Methyl-1,3-butandiol, 2,2-Dimethyl-1,3-propandiol, 4-Cyclopenten-1,3-diol, 1,2-Cyclopentandiol, 2,2-Dimethyl-1,3-propandiol, 1,2-Pentandiol, 2,4-Pentandiol, 1,5-Pentandiol, 4-Cyclopenten-1,3-diol, 2-Methylen-1,3-propandiol, 2,3-Dihydroxy-1,4-dioxan, 2,5-Dihydroxy-1,4-dithian.

Als Beispiele für **dreiwertige Alkohole** seien genannt: Glycerin, Erythrulose, 1,2,4-Butantriol, Erythrose, Threose, Trimethylolethan, 2-Hydroxymethyl-1,3-propandiol.

Als Beispiele für **vierwertige Alkohole** seien genannt: Erythrit, Threit, Pentaerythrit, Arabinose, Ribose, Xylose, Ribulose, Xylulose, Lyxose, Ascorbinsäure, Gluconsäure-γ-lacton.

Als Beispiele für **fünfwertige Alkohole** seien genannt: Arabit, Adonit, Xylit.

Die oben beschriebenen mehrwertigen Alkohole können in einer besonderen Form der Erfindung in veretheter Form eingesetzt werden. Die Ether können zum Beispiel durch Kondensationsreaktionen, Williamson'sche Ethersynthese oder durch Umsetzung mit Alkylenoxiden wie Ethylen-, Propylen- oder Butylenoxid aus den obengenannten Alkoholen hergestellt werden. Als Beispiele seien genannt: Diethylenglykol, Triethylenglykol, Polyethylenglykol, Diglycerin, Triglycerin, Tetraglycerin, Pentaglycerin, Polyglycerin, technische Gemische der Kondensationsprodukte von Glycerin, Glycerinpropoxylat, Diplycerinpropoxylat, Pentaerythritethoxylat, Dipentaeryrthrit, Ethylenglykolmonobutylether, Propylenglykolmonohexylether, Butyldiglykol, Dipropylenglykolmonomethylether.

Als **einwertige Carbonsäuren** für die Veresterung mit den oben genannten Alkoholen können verwendet werden: Ameisensäure, Acrylsäure, Essigsäure, Propionsäure, Buttersäure, Isobuttersäure, Valeriansäure, Isovaleriansäure, 2-Oxovalerian-säure, 3-Oxovaleriansäure, Pivalinsäure, Acetessigsäure, Laevulinsäure, 3-Methyl-2-oxo-buttersäure, Propiolsäure, Tetrahydrofuran-2-carbonsäure, Methoxyessigsäure, Dimethoxyessigsäure, 2-(2-Methoxyethoxy)-essigsäure, 2-Methylessigsäure, Brenztraubensäure, 2-Methoxyethanol, Vinylessigsäure, Allylessigsäure, 2-Pentensäure, 3-Pentensäure, Tetrahydrofuran-2-carbonsäure.

Als Beispiele für **mehrwertige Carbonsäuren** seien genannt: Oxalsäure, Malonsäure, Fumarsäure, Maleinsäure, Bemsteinsäure, Glutarsäure, Acetylendicarbonsäure, Oxalessigsäure, Acetondicarbonsäure, Mesoxalsäure, Citraconsäure, Dimethylmalonsäure, Methylmalonsäure, Ethylmalonsäure.

Auch **Hydroxycarbonsäuren** können als Ausgangsstoffe verwendet werden, z.B. Tartronsäure, Milchsäure, Äpfelsäure, Weinsäure, Citramalsäure, 2-Hydroxyvaleriansäure, 3-Hydroxyvaleriansäure, 3-Hydroxybuttersäure, 3-Hydroxyglutarsäure, Dihydroxyfumarsäure, 2,2-Dimethyl-3-hydroxy-propionsäure, Dimethylolpropionsäure, Glykolsäure.

Die Veresterung kann entweder vollständig oder partiell erfolgen. Gegebenenfalls können auch Gemische dieser Säuren für die Veresterung verwendet werden.

Die aus diesen Alkoholen und Carbonsäuren bzw. den entsprechenden Derivaten hergestellten erfindungsgemäß zu verwendenden Ester sind frei von von Alkalimetallen und Aminen.

Als Beispiele für die **erfindungsgemäßen Ester** seien genannt: Glycerintriacetat, Glycerintripropionat, Triglycerinpentaacetat, Polyglycerinacetat, Diethylenglykoldiacetat, 3-Hydroxyvaleriansäureethylester, Milchsäurebutylester, Milchsäureisobutylester, 3-Hydroxybuttersäureethylester, Oxalsäurediethylester, Mesoxalsäurediethylester, Äpfelsäuredimethylester, Äpfelsäurediisopropylester, Weinsäurediethylester, Weinsäuredipropylester, Weinsäurediisopropylester, Glutarsäuredimethylester, Bemsteinsäuredimethylester, Bemsteinsäurediethylester, Maleinsäurediethylester, Fumarsäurediethylester, Malonsäurediethylester, Acrylsäure-2-hydroxyethylester, 3-Oxovaleriansäuremethylester, Glycerindiacetat, Glycerintributyrat, Glycerintripropionat, Glycerindipropionat, Glycerintriisobutyrat, Glycerindiisobutyrat, Glycidylbutyrat, Acetessigsäurebutylester, Laevulinsäureethylester, 3-Hydroxyglutarsäuredimethylester, Glycerinacetatdipropionat, Glycerindiacetatbutyrat, Propiolsäurebutylester, Propylenglykoldiacetat, Propylenglykoldibutyrat, Diethylenglykoldibutyrat, Trimethylolethantriacetat, Trimethylolethantributyrat, Neopentylalkoholdibutyrat, Methoxyessigsäurepentylester, Dimethoxyessigsäurebutylester, Glykolsäurebutylester.

Der Siedepunkt der erfindungsgemäßen Ester liegt über 180 °C, vorzugsweise über 200 °C bei Normaldruck.

Die erfindungsgemäßen Ester werden in einer Menge bis zu 50 Gew.-%, vorzugsweise in einer Menge von 1 bis 30 Gew.-% zugesetzt, bezogen auf den Klebstoff insgesamt. Ab einer Konzentration von 30, insbesondere von 40 Gew.-% zeigen die Polycyanacrylate haftklebrige Eigenschaften.

Die Cyanacrylat-Klebstoffe basieren im wesentlichen auf üblichen Monoacrylsäureestern und/oder Biscyanoacrylaten.

Unter "üblichen Monocyanoacrylsäureestern" sind folgende Stoffe der allgemeinen Formeln zu verstehen:

H₂C = C(CN)-CO-O-R (I).

In ihr ist R eine Alkyl-, Alkenyl-, Cycloalkyl-, Aryl-, Alkoxyalkyl-, Aralkyl- oder Haloalkylgruppe, insbesondere eine Methyl-, Ethyl-, n-Propyl-, iso-Propyl-, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylgruppe. Die vorgenannten Cyanoacrylate sind dem Klebstoffachmann bekannt, vgl. Ullmanns's Encyclopaedia of Industrial Chemystry, Bd. A1, S. 240, Verlag Chemie Weinheim (1985) sowie US-PS 3 254 111 und PS-PS 3 654 340. Bevorzugte Monomere sind die Allyl-, Methoxyethyl-, Ethoxyethyl-, Methyl-, Ethyl-, Propyl-, Isopropyloder Butyl-Ester der 2-Cyanoacrylsäure.

Unter "Biscyanoacrylaten" sind Stoffe mit folgender allgemeiner Formel zu verstehen:

[H₂C = C(CN)-CO-O]₂R¹ (II)

Darin ist R¹ ein verzweigter oder unverzweigter zweiwertiger Alkan-Rest mit 2 bis 18, insbesondere 6 bis 12 C-Atomen, der auch noch Heteroatome wie Halogene und Sauerstoff oder aliphatische oder aromatische Ringe enthalten kann. Vorzugsweise ist R¹ jedoch ein reiner Kohlenwasserstoff.
Es ist wichtig, daß die Biscyanoacrylate besonders rein sind. Diese Forderung wird erfüllt, z.B. durch folgende Herstellungs- und Reinigungsmethoden: Im wesentlichen werden Monocyanoacrylate mit Diolen umgeestert und die Reaktionsgemische durch fraktionierte Kristallisation anschließend aufgearbeitet.

Ein geeignetes Verfahren zur Herstellung von Biscyanoacrylaten besteht also darin, daß man 2-Cyanoacrylsäure oder deren Alkylester der allgemeinen Formel

H₂C = C(CN)-CO-O-R² (III)

worin R² ein verzweigter oder unverzweigter Alkylrest mit 1 bis 6 C-Atomen ist, mit Diolen der allgemeinen Formel

[HO]₂R¹ (IV)

wobei R¹ ein verzweigter oder unverzweigter zweiwertiger Alkan-Rest mit 2 bis 18 C-Atomen ist, der auch noch Heteroatome wie Halogene und Sauerstoff oder aliphatische oder aromatische Ringe enthalten kann, zu Biscyanoacrylate der allgemeinen Formel II umestert und dann das Reaktionsgemisch durch fraktionierte Kristallisation reinigt.

Ein Ausgangsprodukt ist also die monofunktionelle Cyanoacrylsäure oder deren Alkylester gemäß der Formel III. Der Alkylrest ist so zu wählen, daß der entstehende Alkohol leicht entfernt werden kann. Die dazu geeigneten Möglichkeiten sind dem Fachmann aus der allgemeinen Umesterungsreaktion bekannt. Vorzugsweise wird der Alkohol destillativ entfernt. Daher ist R² ein verzweigter oder unverzweigter Alkoholrest mit 1 bis 6 C-Atomen, vorzugsweise mit einem oder zwei C-Atomen. Der monofunktionelle Cyanoacrylsäureester ist wie üblich stabilisiert.

Bei den Diolen (Formel IV) handelt es sich um zweiwertige primäre oder sekundäre Alkohole, vorzugsweise um primäre Alkohole. Die Hydroxylgruppen können zueinander in beliebiger Stellung stehen, vorzugsweise jedoch in Alpha/-Omega-Stellung. Die Diole enthalten 2 bis 18 C-Atome, vorzugsweise 6 bis 12 C-Atome. Sie können linear, verzweigt oder zyklisch angeordnet sein. Der aliphatische Rest kann auch eine aromatische Gruppe enthalten oder neben den Wasserstoff- und Kohlenstoffatomen auch noch Heteroatome, wie z.B. Chlor- oder Sauerstoff-Atome, vorzugsweise in Form von Polyethylen- oder Polypropylenglykoleinheiten. Als konkrete Diole seien genannt: Hexandiol, Octandiol, Dekandiol und Dodecandiol.

Der Cyanoacrylsäureester wird im Überschuß eingesetzt. Das molare Verhältnis von monofunktionellem Cyanoacrylsäureester zum Diol beträgt also mindestens 2,0 : 1,0, vorzugsweise jedoch 2,5 : 1,0, insbesondere 2,2 : 1,0.

Die Umesterung wird durch starke Säuren katalysiert, insbesondere durch Sulfonsäuren, vorzugsweise durch aromatische Sulfonsäuren, wie z.B. p-Toluolsulfonsäure. Aber auch Naphthalinsulfonsäure und Benzolsulfonsäure sowie saure lonenaustauscher sind möglich. Die Konzentration des Umesterungskatalysators sollte zwischen 1 und 20 Gew.-% liegen, bezogen auf das monofunktionelle Cyanoacrylat.

Die Umesterung erfolgt - wie auch sonst üblich - in Lösung. Als Lösungsmittel dienen Aromaten und Halogenkohlenwasserstoffe. Bevorzugtes Lösungsmittel ist Toluol und Xylol. Die Konzentration der Lösung liegt im Bereich von 10 bis 50, vorzugsweise von 10 bis 20 %.

Der entstehende einwertige Alkohol bzw. das entstehende Wasser werden auf bekannte Art und Weise entfernt, vorzugsweise mit dem Lösungsmittel abdestilliert. Der Umsatz der Umesterung wird kontrolliert z.B. anhand von NMR-Spektren. Wie auch sonst dauert die Reaktion mehrere Stunden. Im Falle von Toluol als Lösungsmittel und p-Toluolsulfonsäure als Katalysator ist die Reaktion nach 10 bis 15 Stunden beendet, d.h. es scheidet sich kein Alkohol mehr ab.

Sehr wichtig ist nun die Aufarbeitung des Reaktionsgemisches. Im Falle von sauren Ionenaustauschern als Katalysator können diese einfach abfiltriert werden. Im Falle von löslichen Sulfonsäuren als Katalysator z.B. von p-Toluolsulfonsäure wird diese durch Lösungsmittelsubstitution abgetrennt: Toluol wird gegen eine Mischung aus Hexan, Heptan oder Dekan ersetzt. Nach zweimaliger fraktionierter Kristallisation erhält man reines Biscyanoacrylat. Die Reinheit beträgt nach NMR-Spektren mehr als 99 %.

Das erhaltene Biscyanoacrylat ist mit den üblichen Stabilisatoren und in den üblichen Konzentrationen lagerstabil, d.h. es verändert bei 20 °C innerhalb von 6 Monaten seinen Schmelzpunkt praktisch nicht.

Die erhaltenen Biscyanoacrylate polymerisieren aber in Gegenwart von Basen sehr schnell, vorzugsweise praktisch gleich schnell wie die entsprechenden Monocyanoacrylate. Wie bei den monofunktionellen Cyanoacrylaten reichen Spuren von Wasser bereits aus. Es entsteht dann ein dreidimensional vemetztes ; Polymer mit relativ guten thermischen Eigenschaften.

Erfindungsgemäß wird es daher in bekannten Cyanoacrylat-Klebstoffen mitverwendet und zwar in einer Menge von 0,5 bis 50, vorzugsweise von 1 bis 10 und insbesondere von 2 bis 5 Gew.-%, bezogen auf den Klebstoff insgesamt.

Der Klebstoff kann neben dem erfindungsgemäßen Weichmacher noch weitere Additive enthalten, z.B. andere Weichmacher, Verdicker, Stabilisatoren, Aktivatoren, Farbstoffe und Beschleuniger, z.B. Polyethylenglykol oder Cyclodextrin.

Der Klebstoff wird wie üblich durch Mischen der Komponenten hergestellt.
Die Lagerstabilität der neuen Klebstoffe lag in allen untersuchten Fällen über 1 Jahr bei Raumtemperatur bzw. über 10 Tage bei 80 °C.

Die Aushärtungsgeschwindigkeit wird durch die erfindungsgemäßen Weichmacher praktisch nicht beeinträchtigt, d.h. sie wird vorzugsweise nicht verdoppelt, und überschreitet 1 Min. bei EPDM praktisch nicht.

Der erfindungsgemäße neue Cyanoacrylatklebstoff eignet sich besonders für Verklebungen von insbesondere von Gummi, Metallen, Holz, Keramik, Porzellan, Pappe, Papier, Kork und Kunststoffe außer PE, PP und Teflon und Styropor.

Die Erfindung wird nun anhand von Beispielen im einzelnen erläutert:

Um einen möglichst umfassenden Überblick über die Eigenschaftsänderungen der Cyanacrylate durch die Zugabe von erfindungsgemäßen Weichmachern zu erhalten, wurden Mischungen aus grundstabilisiertem Reinester und Glycerintriacetat (Triacetin) im Bereich von 0 bis 50 Gew.-% hergestellt. Die Grundstabilisierung besteht aus Hydrochinon (400 bis 1000 ppm) und SO₂ (5 bis 15 ppm). Die Proben wurden sechs Tage auf der Schüttelmaschine homogenisiert und dann vermessen.

### Beispiele 1 bis 3

In den Tabellen 1 bis 3 sind die Ergebnisse (zunächst Viskosität, Abbindezeiten, Festigkeiten) für die drei verschiedenen Estertypen AE, BE und MOE (AE=Ethylester, BE=Butylester, MOE=Methoxyethylester) dargestellt.

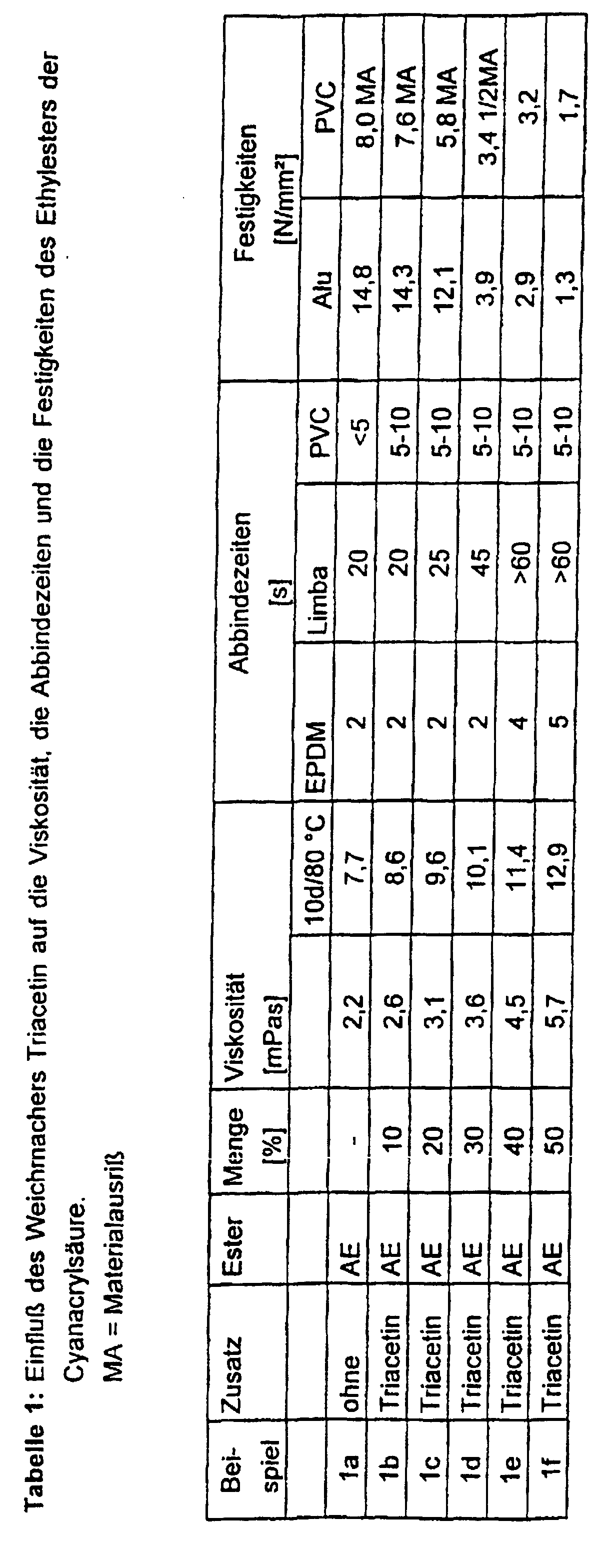

Gemäß Tabelle 1 steigen durch die Zugabe des erfindungsgemäßen Weichmachers die Viskositäten geringfügig an. Dementsprechend liegen die Viskositäten nach dem Kurzzeitlagertest (10 Tage/80 °C in PE-Flaschen) bei den weichmacherhaltigen Proben etwas höher.
Erst bei einem Anteil von 40 % nehmen die Abbindezeiten an EPDM etwas an Limba jedoch deutlich zu. Dagegen hat die Weichmacherzugabe auf die Abbindezeiten an PVC keinen negativen Einfluß.
Die Festigkeiten an Aluminium fallen erst bei einem Weichmachergehalt von 30 % ab, ebenso die Festigkeiten an PVC.

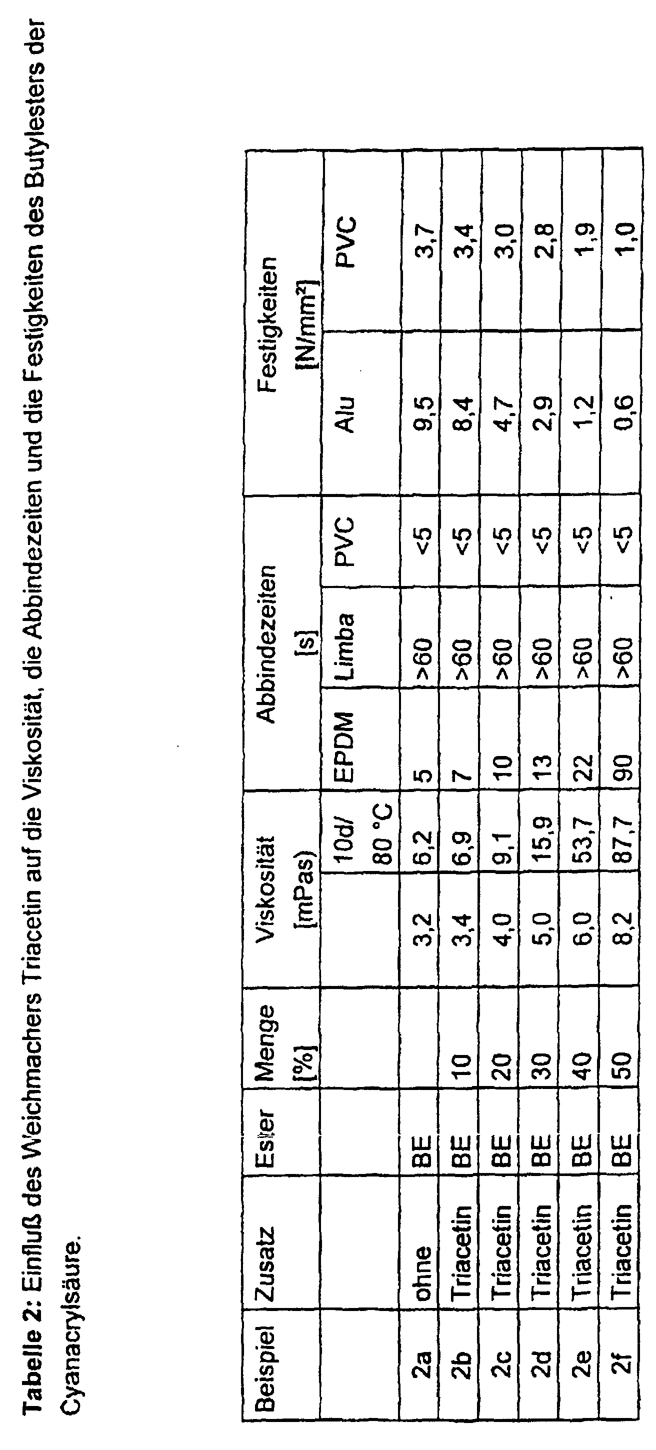

Gemäß Tabelle 2 führt die Weichmacherzugabe beim Butylester ebenfalls zu einer Erhöhung der Viskosität, doch ist diese nach dem Kurzzeitlagertest insbesondere bei den Mischungen mit 40 und 50 % stärker ausgeprägt als beim Ethylester.

Die Abbindezeiten an EPDM sind oberhalb von 40 % Weichmacher für einen Reaktivklebstoff nicht mehr akzeptabel. Unterschiede in den Abbindezeiten an Limbaholz aufgrund verschiedener Weichmachergehalte konnten aufgrund der langen Abbindezeit des Reinesters nicht festgestellt werden. Die Abbindezeiten an PVC werden durch den Weichmacher nicht negativ beeinflußt.

Die beim Butylester schon vergleichsweise geringen Festigkeiten an Aluminium und PVC wurden durch die Zugabe von Weichmacher noch weiter verringert. Sie sind aber ab 20 bzw. 30 % für einen Haftklebstoff noch akzeptabel.

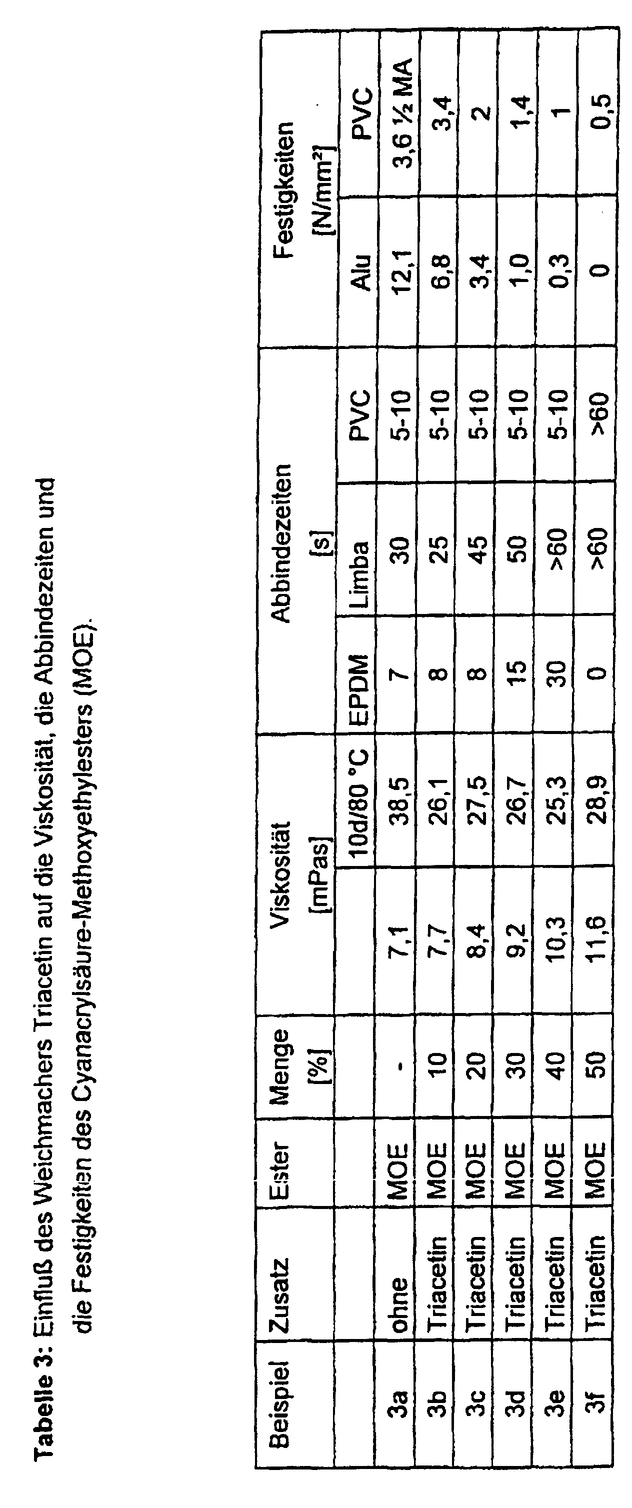

Gemäß Tabelle 3 steigen auch beim MOE die Viskositäten durch die Zugabe des erfindungsgemäßen Weichmachers leicht an, doch im Gegensatz zu AE und BE wird die Kurzzeitlagerstabilität durch den Weichmacher leicht verbessert.

Die Abbindezeiten an EPDM und Limba sind ab 40 % Weichmacheranteil für einen Reaktionsklebstoff zu lang. Die Abbindezeit an PVC verlängert sich erst ab 50 % drastisch, die Abbindezeit an PVC verlängert sich erst ab 50 % drastisch.

Ab einem Weichmachergehalt von 20 %, insbesondere 30 %, sind die Festigkeiten an Aluminium und PVC auf dem Niveau eines Haftklebstoffes.

### Zusammenfassung der Beispiele 1 bis 3

Der Weichmacher Triacetin zeigt bei allen drei Estertypen in Mengen bis zu 50 Gew.-% eine sehr gute Cyanacrylatverträglichkeit bei guter Lagerstabilität.

Während die Abbindezeiten an Limba und EPDM erst bei einem Weichmacheranteil von 40 % zunehmen, werden die Festigkeiten bereits bei einem Weichmachergehalt von 20 % (BE, MOE) bzw. 30 % (AE) verringert, liegen aber immer noch auf dem Niveau von Haftklebstoffen.

### Beispiele 4 bis 6

in den Tabellen 4 bis 6 ist der Weichmachereinfluß auf die Schlagfestigkeit und die Feuchtbeständigkeit der verschiedenen Cyanacrylattypen dargestellt.

**Tabelle 4:**

| Einfluß des Weichmachers Triacetin auf die Scherschlagfestigkeit des Ethylesters | | | | |
|---|---|---|---|---|
| Beispiel | Zusatz | Ester | Menge [%] | Scherschlagfestigkeit [cJ/cm²] (Stahlwürfel) |
| 4a | ohne | AE | - | 18,5 |
| 4b | Triacetin | AE | 10 | 23,6 |
| 4c | Triacetin | AE | 20 | 24,8 |
| 4d | Triacetin | AE | 30 | 26,5 |

Die Weichmacherzugabe führt beim Ethylester (siehe Tabelle 4) zu einer Erhöhung der Schlagfestigkeit, d.h. die Klebverbindung wird elastischer.

Beim Butylester (siehe Tabelle 5) zeigt sich ein ähnliches Ergebnis wie beim Ethylester. Die Schlagfestigkeit, die schon beim Reinester aufgrund der höheren Kettenlänge deutlich oberhalb der des Ethylesters liegt, wird durch die Zugabe von Triacetin weiter verbessert.

**Tabelle 5:**

| Einfluß des Weichmachers Triacetin auf die Scherschlagfestigkeit des Butylesters | | | | |
|---|---|---|---|---|
| Beispiel | Zusatz | Ester | Menge [%] | Scherschlagfestigkeit [cJ/cm²] (Stahlwürfel) |
| 5a | ohne | BE | - | 30,4 |
| 5b | Triacetin | BE | 10 | 32,0 |
| 5c | Triacetin | BE | 20 | 33,0 |
| 5d | Triacetin | BE | 30 | 33,2 |
| 5e | Triacetin | BE | 40 | nicht gemessen |
| 5f | Triacetin | BE | 50 | nicht gemessen |

Im MOE (siehe Tabelle 6) führt die Zugabe von Triacetin zu einer deutlichen Erhöhung der Schlagfestigkeit.

**Tabelle 6:**

| Einfluß des Weichmachers Triacetin auf die Schlagfestigkeit des Ethylesters | | | | |
|---|---|---|---|---|
| Beispiel | Zusatz | Ester | Menge [%] | Scherschlagfestigkeit [Ncm/cm²] (Stahlwürfel) |
| 6a | ohne | MOE | - | 27,2 |
| 6b | Triacetin | MOE | 10 | 39,2 |
| 6c | Triacetin | MOE | 20 | 44,3 |
| 6d | Triacetin | MOE | 30 | 48,8 |

### Zusammenfassung der Versuche 1 bis 6

Die Viskosität und Lagerstabilität des Ethylesters wird durch den Zusatz von bis zu 50 Gew.-% des Weichmachers Triacetin nicht negativ beeinflußt. Auch die Abbindezeiten an EPDM und PVC werden nicht wesentlich verlängert; nur die Abbindezeiten an Limba liegen bei einem Weichmachergehalt von 40 % ohne Beschleunigerzusatz oberhalb von 60 Sekunden. Die Festigkeitswerte an Aluminium und PVC fallen oberhalb von 30 % Weichmacheranteil in den Bereich von Haftklebstoffen ab. Die Verklebungen werden zunehmend elastischer.

Das Einarbeiten von Triacetin in Butylester führt insgesamt zu ähnlichen Eigenschaftsveränderungen wie beim Ethylester. Im Kurzzeitlagertest ist ab 40 % ein deutlicher Viskositätsanstieg nach 10d/80°C zu beobachten und die Festigkeiten an Aluminium sind bereits bei einem Weichmacheranteil von 20 % auf dem Niveau eines Haftklebstoffes.

Der Methoxyethylester zeigt eine sehr gute Weichmacherverträglichkeit im Hinblick auf die Lagerstabilität. Die Abbindezeiten an EPDM und Limba sind bis 40 % akzeptabel, die Festigkeiten ab 20 % auf dem Niveau von Haftklebstoffen.

**Tab. 7:**

| Vergleich: Triacetin mit und ohne 0,2 % PEG-400-Dimethacrylat als Beschleuniger in Cyanacrylsäureethylester. | | | | | | |
|---|---|---|---|---|---|---|
| Zusammensetzung | | Lagerstabilität | | Abbindezeit | | Festigkeit Aluminium [N/mm₂] |
| Triacetin | Beschleuniger | Viskosität [mPas] | Viskosität nach 10d/80°C | EPDM [s] | Limba [s] | |
| 10 % | - | 131,3 | 423,0 | 12 | 55 | 19,3 |
| 25 % | - | 183,0 | 487,4 | 17 | > 60 | 15,3 |
| 10 % | + | 132,0 | 709,3 | 8 | 20 | 17,2 |
| 25 % | + | 186,2 | 632,6 | 14 | 45 | 13,3 |

### Ergebnisse:

- Verbesserung der Lagerstabilität bei Beschleunigerzusatz,
- durch Beschleunigerzusatz schnellere Abbindezeiten an Limba und
- die Festigkeiten liegen auf einem Niveau.

Den Untersuchungen liegen folgende Meßmethoden zugrunde:
1. Die Viskosität wurde folgendermaßen bestimmt:
   Kegel/Platte-Meßsystem, Viskosität bei 20 ± 1 °C.
2. Die Abbindezeit aller Klebstoffzusammensetzungen wurde bei 20 °C ± 1 bei den Werkstoffen wie folgt ermittelt:
   - EPDM:: Eine Vollgummi-Rundschnur (Durchmesser 13 mm) aus Ethylen-Propylen-Terpolymer (EPDM) wurde frisch geschnitten. Auf die Oberfläche wurden 1 bis 2 Tropfen Klebstoff dosiert und die Gummischnurenden sofort zusammengefügt. Die Abbindezeit ist die Zeit bis zum Materialausriß.
   - Aluminium:: Es wurde die Zeit ermittelt, bei der zwei frisch gereinigte und geklebte Aluminiumhülsen (A = 0,5 cm²) einen meßbaren Widerstand gegen Verschieben zeigten.
   - Holzmaterial:: Holzstücke aus Limba mit den Abmessungen 100 x 25 x 10 mm überlappt verklebt. Die Zeit bis zur Anfangshaftung wurde als Abbindezeit bezeichnet.
   - PVC:: Es wurde die Zeit ermittelt, bis zwei gereinigte (entfettete) PVC-Streifen (Abmessung 100 x 25 x 4 mm), die 10 mm überlappend verklebt wurden, nach dem Auseinanderbrechen auf den Klebflächen nicht mehr klebten.
3. Zugscherfestigkeiten wurden folgendermaßen bestimmt:
   Die Prüfkörper waren 100 x 25 x 1,5 mm groß, die Überlappung 10 mm und die verklebte Fläche 250 mm².
   Aluminiumblech wurde gereinigt und gesandstrahlt, das PVC nur gereinigt (entfettet).
   Es wurden jeweils 5 Verklebungen durchgeführt und der Mittelwert angegeben. Die Prüfbedingungen waren:
      Die Zerreißmaschine arbeitete mit einem Vorschub von 10 mm/min.
      Die Aushärtung erfolgte in 6 Tagen bei 22 °C/40 % relativer Luftfeuchtigkeit (Klimaraum).
4. Die Bestimmung der Scherschlagfestigkeit erfolgte in Anlehnung an DIN 29653 bei RT. Die verklebte Fläche der Stahlwürfel betrug 1 cm².

## Patentansprüche

1. Cyanacrylat-Klebstoff mit einem Ester-Zusatz, **dadurch gekennzeichnet, daß** als Ester mindestens ein Teil- und/oder Voll-Ester aus ein- oder mehrwertigen aliphatischen Carbonsäuren mit 1 bis 5 direkt miteinander verbundenen C-Atomen und 1- bis 5wertigen aliphatischen Alkoholen mit 1 bis 5 direkt miteinander verbundenen C-Atomen verwendet wird, wobei die Anzahl der direkt miteinander verbundenen C-Atome in den weiteren aliphatischen Gruppen maximal 3 beträgt, wenn eine aliphatische Gruppe 4 oder 5 C-Atome enthält, und dadurch daß der Ester-Zusatz frei von Alkali-Metallen und Aminen ist.

2. Cyanacrylat-Klebstoff nach Anspruch 1, **gekennzeichnet durch** Alkohole mit einer Wertigkeit von 1 bis 5, insbesondere 2 bis 4, und mit 1 bis 5, insbesondere mit 3 oder 4 direkt miteinander verbundenden C-Atomen.

3. Cyanacrylat-Klebstoff nach Anspruch 1 oder 2, **gekennzeichnet durch** einwertige Carbonsäuren mit 1 bis 3 C-Atomen.

4. Cyanacrylat-Klebstoff nach mindestens einem der Ansprüche 1, 2 oder 3, **gekennzeichnet durch** Ester, die frei sind von Katalysatoren.

5. Cyanacrylat-Klebstoff nach mindestens einem der Ansprüche 1 bis 4, **gekennzeichnet durch** folgende Cyanoacrylsäureester: Ethylester, Butylester und Methoxyethylester.

6. Cyanacrylat-Klebstoff nach mindestens einem der Ansprüche 1 bis 5, **gekennzeichnet durch** bis zu 50 Gew.-%, vorzugsweise bis 30 Gew.-% an Ester, bezogen auf den Klebstoff insgesamt.

7. Cyanacrylat-Klebstoff nach Anspruch 6, **gekennzeichnet durch** 20 bis 50 Gew.-% an Ester, vorzugsweise 30 bis 45 Gew.-% an Ester, bezogen auf den Klebstoff insgesamt.

8. Cyanacrylat-Klebstoff nach Anspruch 1, 2, oder 3, **gekennzeichnet durch** Triacetin oder Diacetin als Ester.

## Claims

1. A cyanoacrylate adhesive containing an added ester, **characterized in that** at least one partial and/or full ester of monobasic or polybasic aliphatic carboxylic acids containing 1 to 5 carbon atoms directly attached to one another and monohydric to pentahydric aliphatic alcohols containing 1 to 5 carbon atoms directly attached to one another is used as the ester, the number of carbon atoms directly attached to one another in the other aliphatic groups being at most 3 where one aliphatic group contains 4 or 5 carbon atoms and **in that** the esters are free from alkali metals and amines.

2. A cyanoacrylate adhesive as claimed in claim 1, **characterized by** monohydric to pentahydric alcohols and, more particularly, dihydric to tetrahydric alcohols containing 1 to 5 and, more particularly, 3 or 4 carbon atoms directly attached to one another.

3. A cyanoacrylate adhesive as claimed in claim 1 or 2, **characterized by** monobasic carboxylic acids containing 1 to 3 carbon atoms.

4. A cyanoacrylate adhesive as claimed in at least one of claims 1, 2 or 3, **characterized by** esters which are free from catalysts.

5. A cyanoacrylate adhesive as claimed in at least one of claims 1 to 4, **characterized by** the following cyanoacrylic acid esters: ethyl ester, butyl ester and methoxyethyl ester.

6. A cyanoacrylate adhesive as claimed in at least one of claims 1 to 5, **characterized by** up to 50% by weight and preferably up to 30% by weight of ester, based on the adhesive as a whole.

7. A cyanoacrylate adhesive as claimed in claim 6, **characterized by** 20 to 50% by weight of ester and preferably 30 to 45% by weight of ester, based on the adhesive as a whole.

8. A cyanoacrylate adhesive as claimed in claim 1, 2 or 3, **characterized by** triacetin or diacetin as the ester.

## Revendications

1. Adhésif du type cyanoacrylate ayant un additif en ester,
**caractérisé en ce que**
comme ester on utilise au moins un ester partiel et/ou complet à base d'acides carboxyliques aliphatiques monofonctionnels ou plurifonctionnels ayant de 1 à 5 atomes de C reliés directement les uns aux autres, et d'alcools aliphatiques mono- à pentafonctionnels ayant de 1 à 5 atomes de C reliés directement les uns aux autres, le nombre des atomes C reliés directement les uns aux autres dans les autres groupes aliphatiques étant au maximum 3, lorsqu'un groupe aliphatique contient 4 à 5 atomes de C,
**caractérisé en ce que**
l'addition d'ester est dépourvue de métal alcalin et d'amines.

2. Adhésif du type cyanoacrylate selon la revendication 1,
**caractérisé par**
des alcools ayant une valence de 1 à 5, en particulier de 2 à 4 et ayant de 1 à 5, en particulier ayant 3 ou 4 atomes de C reliés directement les uns aux autres.

3. Adhésif du type cyanoacrylate selon la revendication 1 ou 2,
**caractérisé par**
des acides carboxyliques monovalents ayant de 1 à 3 atomes de C.

4. Adhésif du type cyanoacrylate selon au moins l'une quelconque des revendications 1, 2 ou 3,
**caractérisé par**
des esters qui sont exempts de catalyseurs.

5. Adhésif du type cyanoacrylate selon au moins l'une quelconque des revendications 1 à 4,
**caractérisé par**
la présence d'esters d'acide cyanoacrylique suivants : ester éthylique, ester butylique et ester méthoxyéthylique.

6. Adhésif du type cyanoacrylate selon au moins l'une quelconque des revendications 1 à 5,
**caractérisé par**
la présence de jusqu'à 50 % en poids, de préférence jusqu'à 30 % en poids en ester rapporté à l'adhésif au total.

7. Adhésif du type cyanoacrylate selon la revendication 6,
**caractérisé par**
la présence de 20 à 50 % en poids d'ester, de préférence de 30 à 45 % en poids d'ester ramené à l'adhésif globalement.

8. Adhésif du type cyanoacrylate selon la revendication 1, la revendication 2 ou la revendication 3,
**caractérisé par**
la présence de triacétine ou de diacétine comme ester.
